# EUROPEAN PATENT SPECIFICATION

(11) **EP 0 440 278 B1**
(45) Date of publication and mention of the grant of the patent: **17.04.1996**
(21) Application number: 91200087.4
(22) Date of filing: 18.01.1991
(51) Int. Cl.: F16B 12/40, F16B 12/42, A47B 47/00

(54) **Modular element to form tubular structures**
Modulares Element zum Bilden von rohrförmigen Strukturen
Elément modulaire pour former des structures tubulaires

(30) Priority: 01.02.1990 IT 1922390
(43) Date of publication of application: 07.08.1991
(73) Proprietor: SALVATORE CORBETTA e C. s.a.s., I-22065 Cassago Brianza (Como) (IT)
(72) Inventor: Motta, Enrico, Cisiano Bergamasco (BG) (IT)
(74) Representative: de Pasquale, Carlo

(56) References cited:
- EP-A- 0 014 790
- CH-A- 195 607
- DE-A- 3 706 183
- US-A- 4 237 798

## Description

The present invention refers to a structural element allowing the assembling of tubular posts for libraries, shelves, partitions, exhibitions or other furnishing requirements in general with maximun modularity and no limitation whatsoever as to creativity. It is a well known the fact that lately in the furnishing field, the concept of modularity in structural components has become more and more popular offering technical solutions which satisfy both the esthetic and functional needs.

US Patent Nr. 4.237.798 describes a flat shelf having truncated corners with a corner connector disposed against each truncated corner. Each connector is constituted of a semi-circular housing intended to receive tubular posts and other elements acting as jaws tightening on the posts by screws.

With the element described by the US Patent Nr. 4.237.798 it is not possible to constitute the columns described in this invention, but normal well-known shelves made by a flat element and four legs or jambs.

However, even the most sophisticated structural methods have always shown handicaps, some modular or technical limitation, and sometimes a much too complicated assembling operation requiring specialized personel ending to too costly and time consuming.

These inconveniences, which are well known to most constructors have found a just solution in the present invention, in that the mentioned modular element allows the realization of tubular modular structures of any size or type, one two or three dimensional with no creative limitation and above all, easy to assemble without requiring special tools or specialized personnel.

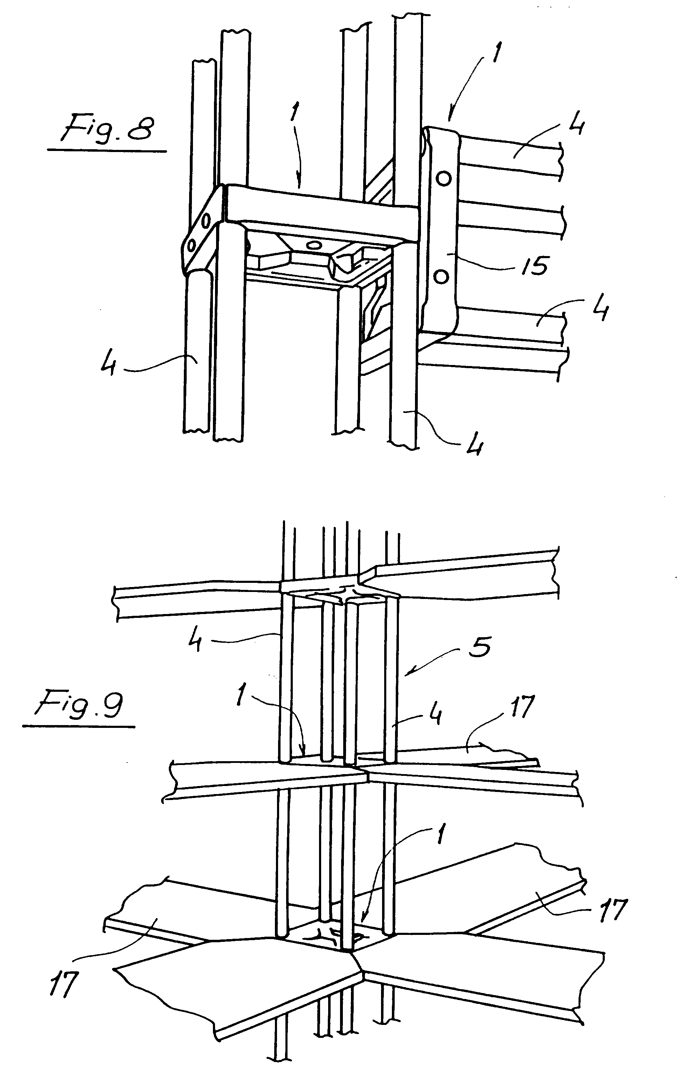

With said elements, using two or more structures directly connected (see fig. 8) or assembled by flat elements like shelves (see fig. 9), it is therefore possible to realize structures to make libraries shelves, lighting frames, partitions, or exhibition displays satisfying any need with maximum functionality, exclusiveness and design.

These and other characteristics will be better described in the following detailled description which is exemplifying and not limiting of the finding, and with the help of various drawings, in which.

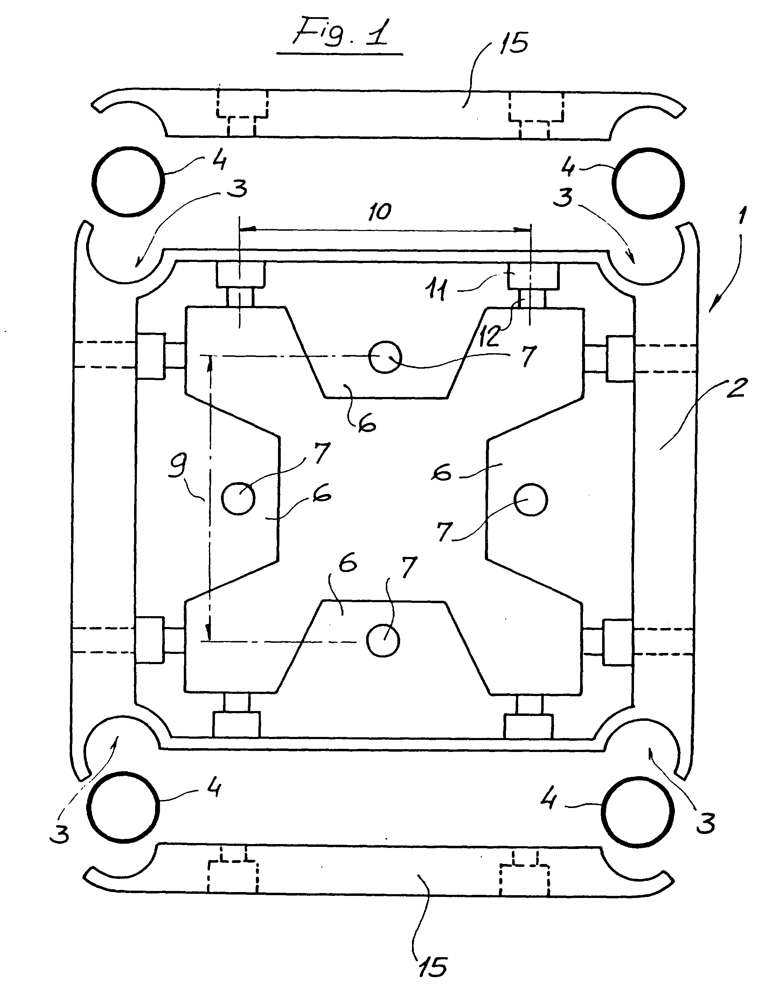

Fig.1 shows an exploded view af the various parts making up the modular element in question.

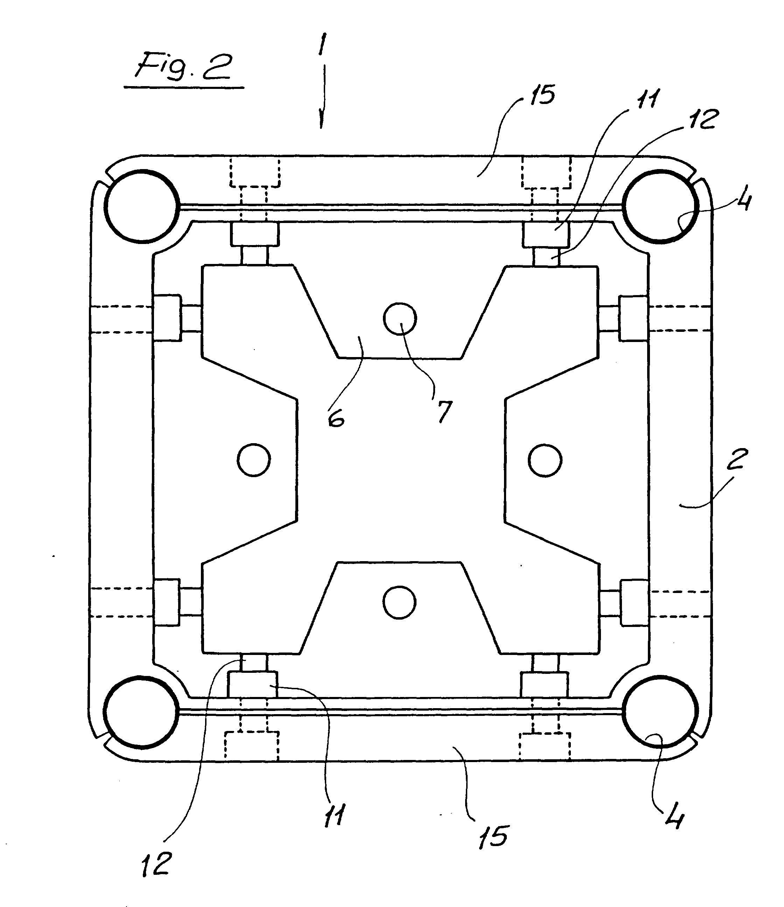

Fig.2 shaws a view in its whole of the modular elements in question putting in evidence the realization of the structural knot.

Fig.3 shows a detail of the element in question putting in evidence the locking element supplied with supports and fixing element to form shelves.

Fig.4 shows a prospective view of the simple locking element without showing the support for shelves.

Fig.5 shows a prospective view of the locking element furnished with support for the shelves.

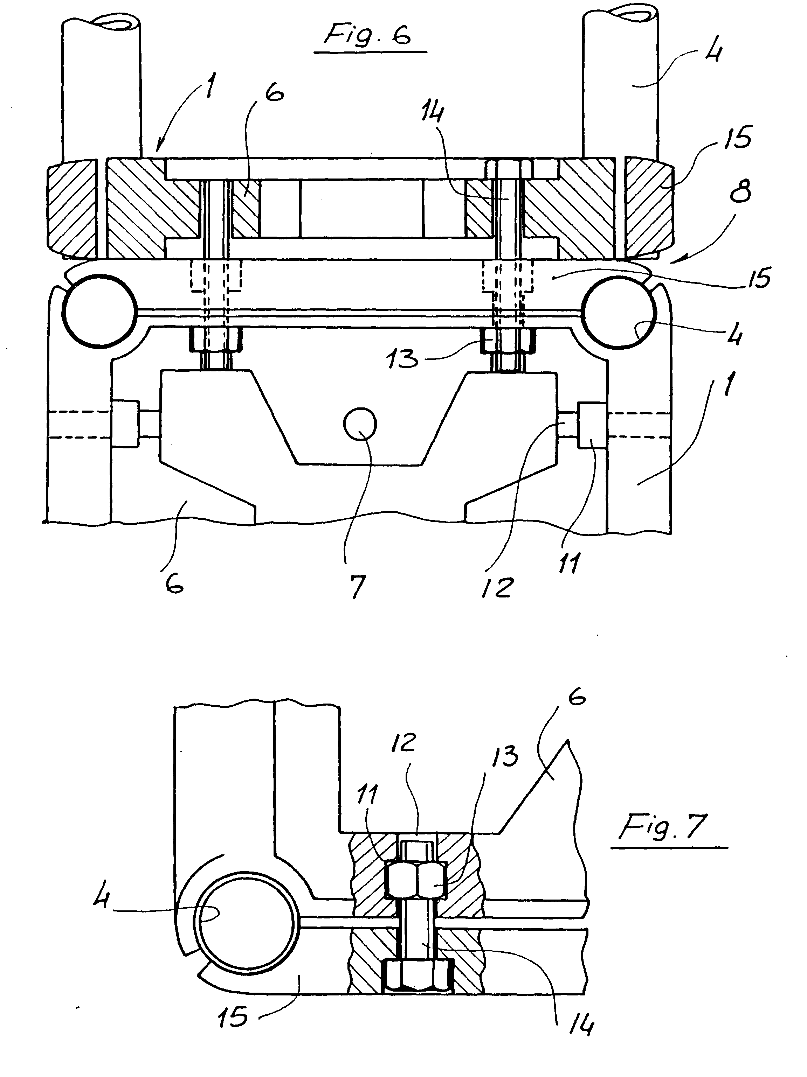

Fig. 6 shows a partial sectioning of a detail pointing out the realization of an orthogonal structural knot.

Fig. 7 shows a detail of the structural locking system pointing out the housing of the nut so arranged to facilitate tightening of the bolt without the need of the hexagonal nose key.

Fig. 8 shows a schematic prospective view of an orthogonal structural knot obtained according to the invention.

Fig. 9 shows a schematic prospective view of an example of a variation structure obtained by means of the modular element in question, pointing out the realization of shelves.

With reference to the various drawings cited, the element 1 in question comprises practically of a supporting element 2 obtained preferably by fusion, provided with four semicircle housings 3 to contain tubular elements 4 making up the structure 5 and with four internal flat wings 6 duly shaped inside of which are obtained the four holes 7 to allow the mechanical orthogonal connection 8 between the two structures 5.

Infact, the interaxis 9 between the two holes 7 in the supporting wings 6 is practically identical to the interaxis 10 of the housings 11 and 12 for the locking nut 13 and the screws 14 by means of which the structure can be assembled.

The housing 11 of the nut 13, in obviously obtained to facilitate the assembling operation practically works as a fixed housing keeping the nut 13 steadfast even during rotation and tightening of screw 14, thus avoiding the need to use the hexagonal nose key.

The cited structure 5 is practically realized by arranging four tubular posts 4 in the suitable semicircular housing 3 and by joining the two external elements 15 with contrary agents such as locking jaws and tightened by said screws 14 and nuts 13 therefore simple tubular bars cut at desired length can be used as tubular post 3.

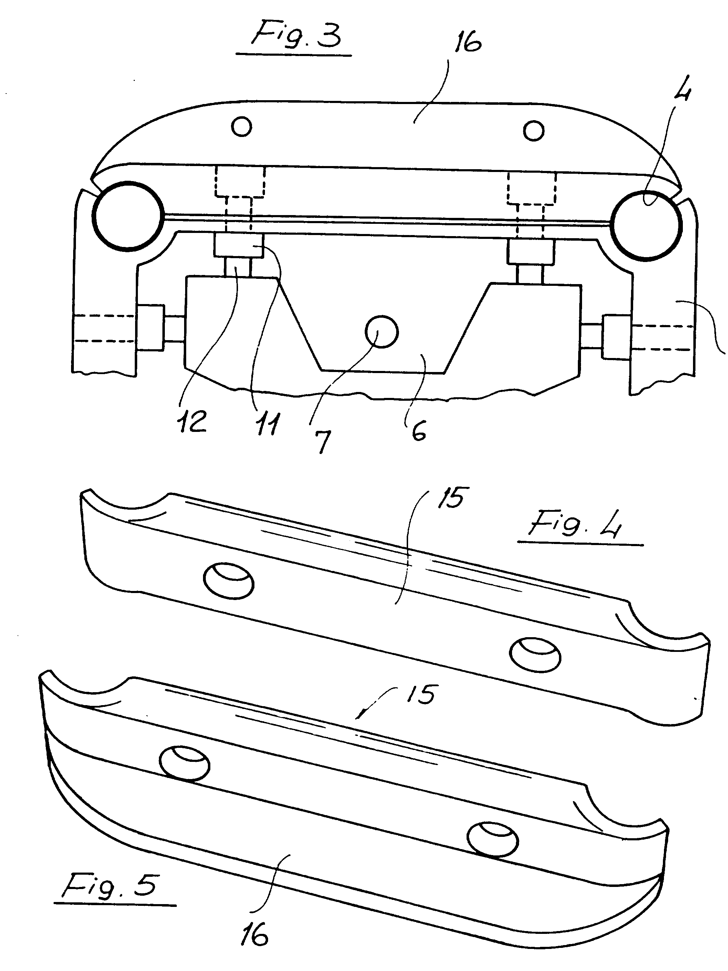

As shown in fig.3 the external elements 15 working as locking jaws can be simple or furnished with suitable bracket 16 (see fig.5) to sustain shelves 17 arranged so as to best suit ones needs and requirements in the furnishing field as shown in Fig.9. These brackets can be applied at one or both full side faces of the bearing element 2 therefore arranging opportunely a bearing element with two jaws furnished with the necessary number of bearing wings, one can realize knots to sustain one, two. three or four brackets all meeting with each other.

The above description and the various illustrations included, show clealy that the present finding represents the right solution to the problem of structurally joining tubular elements together using an extremely simple and rational operation to realize structures of any type for any furnishing need for the home, industry or fair. Furthermore, the loosening and height adjusting operations along the posts are extremely simple and do not require the disassembling of the structure in case of an irregular line-up of the elements.

It should also be understood that the present form of realization does not limit the enormous variation of realization possible, on the contrary modifications, additions, variations and substitutions can be made without departing from the invention as specified in the claims.

## Claims

1. Structural element to realize columns (5), constituted by a plurality of tubular posts, a plate element (2) comprising a frame comprising four sides, provided with semicircular housings (3) formed in the corners of the plate element (2) in which are housed the tubular posts (4), the posts being locked to the plate element (2) by further elements (15) acting as jaws which are tightened on the posts by means of bolts (14) and nuts (13) through corresponding holes (11,12) provided in each side leg of the plate element (2) and in the main wall of each element (15), to form structural knots to realize shelves and the like, the plate element (2) being provided with internal wings (6) in each of which is formed a hole (7) for bolts to allow an orthogonal connection beween two or more structural elements in order to obtain complex structural knots.

2. Structural element according to claim 1, characterized by the fact that said holes (7) have the same spacing (9) as have the holes (11,12) formed in the walls of the plate element (2), to allow an orthogonal connection between two or more structural elements.

3. Structural element according to claim 1 characterized by the fact that the element (15) acting as jaws can, when necessary, have support wings (16) provided with opportune holes to hold up and fasten any kind of board or surface for the realization of shelves.

## Patentansprüche

1. Konstruktives Element zur Bildung von Säulen (5), bestehend aus mehreren rohrfömigen Ständern und einem Plattenelement (2), welches als vierseitiger Rahmen mit halbkugelförmigen Gehäusen (3) an den Ecken des Plattenelements (2) ausgeführt ist diese enthalten die rohrförmigen Ständer (4), wobei die Ständer mit dem Plattenelement (2) durch weitere, als Klemmbacken dienende Elemente (15) verbunden sind; die Elemente (15) werden mit den Ständern durch Schrauben (14) und Muttern (13) in geeigneten Bohrugen (11, 12) auf jeder Seite des Plattenelements (2) und in der Hauptwand jedes Elements (15) verspannt; damit bilden diese konstruktive Knoten zum Aufbau von Gestellen und ähnlichem, wobei das Plattenelement (2) intern mit Auskragungen (6) versehen ist; diese Auskragungen haben für Schrauben eine Bohrung (7), so daß orthogonale Verbindungen zwischen zwei und mehr konstruktiven Elementen und damit kompliziertere konstruktive Knoten möglich sind.

2. Konstruktives Element entsprechend Patentanspruch 1, dadurch gekennzeichnet, daß die erwähnten Bohrungen (7) den gleichen Abstand (9) naben wie die Bohrungen (11, 12) in den Wänden der Platte (2) so daß orthogonale Verbindungen zwischen zwei und mehr konstruktiven Elementen möglich sind.

3. Konstruktives Element entsprechend Patentanspruch 1, dadurch gekennzeichnet, daß die als Klemmbacken dienenden Elemente (15) im Bedarfsfall mit Stützkonsolen (16) versehen werden können, die geeignete Bohrungen aufweisen, um so Oberflächen oder Bretter jeder Art zu halten und zu befestigen und daraus Gestelle aufzubauen.

## Revendications

1. Elément structurel pour réaliser des colonnes (5), constituées de plusieurs poteaux tubulaires, d'un élément plat (2) constitué d'un cadre à quatre côtés comprenant des logements semi-circulaires (3) situés dans les coins dudit élément plat (2) dans lesquels se logent les poteaux tubulaires (4), les poteaux étant fixés à l'élément plat (2) par d'autres éléments (15) agissant comme des mâchoires qui sont bloquées sur les poteaux avec des boulons (14) et des écrous (13) passés dans les trous correspondants (11, 12) situés sur chaque partie latérale de l'élément plat (2) et sur la face principale de chaque élément pour former des noeuds structurals afin de réaliser des étagères ou autre, l'élément plat (2) comportant des ailettes internes (6) percées par un trou (7) pour les boulons pour permettre une connexion orthogonale entre deux ou plus éléments structurels dans le but d'obtenir un noeud structurel complexe.

2. Elément structurel suivant revendication 1, caractérisé par le fait que les dits trous (7) sont écartés de la même distance (9) que celle des trous (11, 12) situés sur les parois de la plaque (2) pour réaliser une connexion orthogonale entre deux ou plusieurs éléments structurels.

3. Elément structurel suivant revendication 1, caractérisé par la fait que l'élément (15) agissant en tant que mâchoire peut si nécessaire recevoir des ailettes de support (16) comportant les trous adaptés pour tenir et bloquer toute sorte de planche ou surface pour la réalisation d'étagères.
